# EUROPEAN PATENT APPLICATION

(11) **EP 2 713 613 A2**
(43) Date of publication of application: **02.04.2014**
(21) Application number: 13181500.3
(22) Date of filing: 23.08.2013
(51) Int. Cl.: H04N 13/00, H04N 13/04

(54) **Apparatus and method for processing multi-view image**

(30) Priority: 26.09.2012 KR 20120107430
(71) Applicant: Samsung Electronics Co., Ltd, Gyeonggi-do 443-742 (KR)
(72) Inventor: Baik, Aron, 137-858 Seoul (KR)
(74) Representative: D'Halleweyn, Nele Veerle Trees Gertrudis

(57) **Abstract**

An apparatus and method for processing a multi-view image are provided. The multi-view image processing apparatus includes a blur strength determination unit to determine blur strengths of view images constituting a multi-view image, based on views of the view images and disparity information of the view images, and a blur effect application unit to apply a blur effect to the view images according to the blur strengths of the view images.

## Description

One or more embodiments of the following description relate to an apparatus and method for processing a multi-view image to reduce inversion of disparity in a pseudoscopic image.

A multi-view image or a stereoscopic image may be produced by geometrically calibrating and spatially processing images taken by at least two cameras.

The multi-view image and the like are related to a 3-dimensional (3D) image processing technology that provides images of various views to a viewer. The 3D image processing technology provides a more stereoscopic image by obtaining identical 3D scenes using at least two cameras.

Since a group of views (a viewing cone of a plurality of views) are repeated at particular intervals in the multi-view image, a pseudoscopic image, in which disparity is inverted, may be shown to the viewer located at a boundary between repeated views, i.e. between adjacent viewing cones.

Accordingly, there is a need for a method for reducing the disparity inversion in the pseudoscopic image.

In an aspect of one or more embodiments, there is provided a multi-view image processing apparatus including a blur strength determination unit to determine blur strengths for view images constituting a multi-view image, based on views of the view images and disparity information of the view images, and a blur effect application unit to apply a blur effect to the view images according to the blur strengths of the view images.

Embodiments of the invention are based *inter alia* on the inventive insight that the appearance of a pseudoscopic image, at a boundary between adjacent viewing cones of a multi-view image, can be avoided or reduced by applying blur effects to the view images.

In the context of embodiments of the present invention the term "blur strength" refers to a parameter representative for the sharpness of images or strokes in an image. In the literature, there exist many techniques for applying blur to an image on the basis of a desirable blur strength. Any suitable technique may be used in the context of the invention.

In the context of embodiments of the present invention the term "view of a view image" refers to a viewing position/location in a viewing cone of the multi-view image, A multi-view image consists of a plurality of adjacent viewing cones, each viewing cones comprising a plurality of adjacent views 1 to N associated with view images, wherein view 1 and view N are boundary views.

In the context of embodiments of the present invention "applying a blur effect to the view images according to the blur strengths" refers to changing the blur strength of a view image in order to reduce the chance of seeing a pseudoscopic image at a boundary between adjacent viewing cones of a multi-view image.

The blur strength determination unit may determine the blur strengths of the view images according to a first blur strength based on the views of the view images and a second blur strength based on the disparity information of the view images. In an exemplary embodiment the blur strength of a view image is calculated as a function of the first and the second blur strength.

The blur strength determination unit may identify disparity of an object included in the view images based on the disparity information, and determine the second blur strength based on the disparity of the object. In other words, according to embodiments of the invention disparity information of an object in a view image is used in the calculation of the second blur strength.

The blur strength determination unit may increase the second blur strength of the object according to an increase in the disparity of the object. The blur strength determination unit may be configured to calculate the second blur strength of the object as a function of the disparity of the object, wherein the second blur strength increases with an increasing disparity of the object.

The blur strength determination unit may determine the first blur strength according to a difference between the views of the view images and a view 1 or a difference between the views of the view images and a view N, when the multi-view image expresses the view 1 to the view N. The blur strength determination unit may be configured to calculate the first blur strength of a view image as a function of the distance between the view corresponding with said view image and a view 1, or the distance between the view corresponding with said view image and a view N, wherein each viewing cone of said multi-view image consists of views 1 to N.

The blur strength determination unit may determine the first blur strength to be larger as the views of the view images are closer to the view 1 or the view N, views 1 and N being a boundary views. The blur strength determination unit may be configured to calculate the first blur strength of a view image as a function of the position of the view corresponding with said view image in a viewing cone, wherein the first blur strength is larger as said view is closer to a boundary view (view 1 or view N) of said viewing cone.

In an aspect of one or more embodiments, there is provided a multi-view image processing method including determining blur strengths of view images constituting a multi-view image, based on views of the view images and disparity information of the view images, and applying a blur effect to the view images according to the blur strengths of the view images.

The determining may include determining the blur strengths of the view images according to a first blur strength based on the views of the view images and a second blur strength based on the disparity information of the view images.

The determining may include identifying disparity of an object included in the view images based on the disparity information, and determining the second blur strength based on the disparity of the object.

The determining may include increasing the second blur strength of the object according to an increase in the disparity of the object.

The determining may include determining the first blur strength according to a difference between the views of the view images and a view 1 or a difference between the views of the view images and a view N, when the multi-view image expresses from the view 1 to the view N.

The determining may include determining the first blur strength to be larger as the views of the view images are closer to the view 1 or the view N of a boundary view.

In an aspect of one or more embodiments, there is provided an apparatus for processing and displaying a multi-view image including a blur strength determiner, using at least one processor, to determine blur strengths of images of various views forming a multi-view image, based on various views of the images and disparity information of the images; a blur effect applier to apply a blur effect to the images according to blur strengths of the images; and a multi-view image display receiving the images to which blur has been applied and displaying the plurality of views to a viewer.

The blur effect may be applied to reduce disparity inversion.

The disparity information of the images may include disparity between depth values of objects within each image.

The plurality of views of images displayed to a viewer may be displayed in groups of N views of images, wherein N is a positive integer greater than one.

The first image providing a first view and the image N having the N view may be boundary images, and the blur strength may be larger in the boundary images than the blur strength in images between boundaries.

In an aspect of one or more embodiments, there is provided a method for processing and displaying a multi-view image including determining, using at least one processor, blur strengths of images of various views forming a multi-view image, based on various views of the images and disparity information of the images; applying a blur effect to the images according to blur strengths of the images; and displaying the images to which blur has been applied as the plurality of views to a viewer.

The blur effect may be applied to reduce disparity inversion.

The disparity information of the images may include disparity between depth values of objects within each image.

The plurality of views of images displayed to a viewer may be displayed in groups of N views of images, wherein N is a positive integer greater than one.

The first image providing a first view and the image N having the N view may be boundary images, and the blur strength may be larger in the boundary images than the blur strength in images between boundaries.

According to an aspect of one or more embodiments, there is provided at least one non-transitory computer readable medium storing computer readable instructions to implement methods of one or more embodiments.

### BRIEF DESCRIPTION OF THE DRAWINGS

These and/or other aspects will become apparent and more readily appreciated from the following description of embodiments, taken in conjunction with the accompanying drawings of which:
FIG. 1 illustrates configuration of a multi-view image processing apparatus according to embodiments;
FIG. 2 illustrates a multi-view image display apparatus according to embodiments;
FIG. 3 illustrates relationships between views of view images and a first blur strength of the view images, according to embodiments;
FIG. 4 illustrates relationships between screen disparity of an object and a second blur strength of the object in view images, according to embodiments;
FIG. 5 illustrates example view images applying a blur effect, according to embodiments;
FIG. 6 illustrates an example view image applying a blur effect, according to embodiments; and
FIG. 7 illustrates a multi-view image processing method according to embodiments.

### DETAILED DESCRIPTION

Reference will now be made in detail to embodiments, examples of which are illustrated in the accompanying drawings, wherein like reference numerals refer to the like elements throughout.

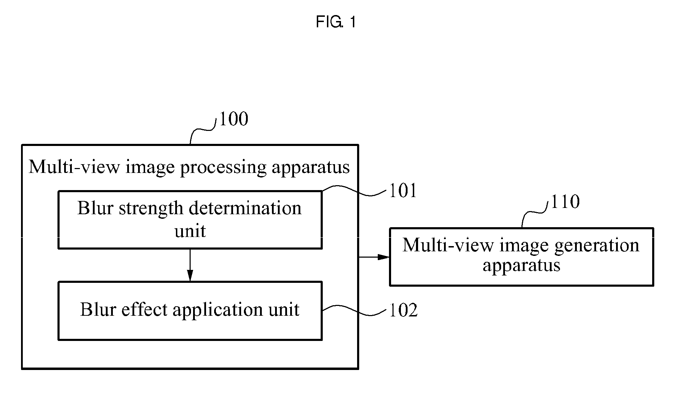

FIG. 1 illustrates configuration of a multi-view image processing apparatus 100 according to embodiments.

The multi-view image processing apparatus 100 applies a blur effect to view images constituting a multi-view, the view images having a possibility of a pseudoscopic image, and provides the view images to a multi-view image generation apparatus 110. Thus, the multi-view image processing apparatus 100 may prevent a pseudoscopic image from being provided to a viewer. Here, the multi-view image generation apparatus (multi-view image generator) 110 may generate the multi-view image by mixing the view images to which the blur effect is applied by the multi-view image processing apparatus 100.

Referring to FIG. 1, the multi-view image processing apparatus 100 may include a blur strength determination unit (blur strength determiner) 101 and a blur effect application unit (blur effect applier) 102.

The blur strength determination unit 101 may determine blur strengths based on views of the view images constituting the multi-view image and disparity information of the view images.

When the multi-view image expresses a view 1 to a view N, the views of the view images may be indicated by view numbers (positive integers) for identification of the views expressed by the view images.

The disparity information of the view images may be information on screen disparity, which refers to disparity occurring when objects included in the view images are expressed on a screen. The screen disparity may be zero with respect to an object having no disparity between a left view image and a right view image, and may be increased to a positive or negative direction according to disparity of the object in a left view image and a right view image. Whether the screen disparity has a positive value or a negative value may be determined by a direction of forming a 3-dimensional (3D) effect according to the disparity. For example, when a depth value is applied to a background, the screen disparity of the background may have a negative value. When a depth value is applied to an object moving toward a viewer, the screen disparity of the object may have a positive value.

The disparity information of the view images may relate to depth information of the objects included in the view images. For example, when the view images include a first object and a second object and when the first object is expressed as being located in front of the second object, disparity of the first object may be determined by a difference between depth information of the second object having disparity of zero and depth information of the first object. For example, when the difference between the depth information of the second object and the depth information of the first object is relatively significant, a 3D effect to be expressed by the first object is relatively large. Therefore, the disparity of the first object at the left view image and the right view image may be increased. Conversely, when the difference between the depth information of the second object and the depth information of the first object is relatively minor, the 3D effect to be expressed by the first object is relatively small. Therefore, the disparity of the first object at the left view image and the right view image may be decreased.

The blur strength determination unit 101 may determine the blur strengths of the view images according to a first blur strength based on the views of the view images and a second blur strength based on the disparity information of the view images. For example, the blur strength determination unit 101 may determine the blur strength of the view images by applying multiplication or a min-operation to the first blur strength and the second blur strength.

When the multi-view image expresses the view 1 to the view N, the blur strength determination unit 101 may determine the first blur strength according to a difference between the views of the view images and the view 1 or a difference between the views of the view images and the view N.

When the multi-view image expresses the view 1 to the view N, the view 1 may be expressed next to the view N. Therefore, the view 1 and the view N may be defined as boundary views, that is, views located at a boundary between repeated view groups. When the viewer watches a view image of the view N and a view image of the view 1 by a left eye and a right eye, respectively, a pseudoscopic image may be generated, in which disparity of the objects included in the view images is inversely shown.

That is, as a view among the views of the multi-view image is closer to the boundary view, occurrence probability of the pseudoscopic image may increase. For example, when a distance between view images is short, the viewer may watch the view image of the view N and a view image of a view 2 by the left eye and the right eye, respectively. Here, since the disparity of the objects included in the view images is shown inverse, the pseudoscopic image may be generated.

Therefore, as the views of the view images are closer to the view 1 or the view N which are the boundary views, the blur strength determination unit 101 may determine the first blur strength of the view images to be larger. As to a view N/2 which is farthest from the boundary views, there may be almost no occurrence probability of the pseudoscopic image. Accordingly, the first blur strength of the view N/2 may be zero.

In addition, the blur strength determination unit 101 may identify the screen disparity of the object included in the view images based on the disparity information, and determine the second blur strength based on the screen disparity of the object.

The blur strength determination unit 101 may increase the second blur strength of the object according to an increase in the disparity of the object. When the screen disparity included in the disparity information is zero, the disparity of the object is zero at the left view image and the right view image. As the screen disparity increases in the positive direction or the negative direction, the disparity of the object at the left view image and the right view image may be increased.

The object, of which the screen disparity is zero, is expressed identically at the left view image and the right view image. Therefore, although the pseudoscopic image is generated such that the viewer watches the left view image by the right eye, the image may be expressed the same as when the viewer watches the left view image by the left eye. Accordingly, since the disparity of the object is not changed without application of a blur effect, the second blur strength of the object may be zero.

The blur effect application unit 102 may apply the blur effect to the view images according to the blur strengths of the view images determined by the blur strength determination unit 101. Here, the blur effect application unit 102 may use various blur filters. For example, the blur effect application unit 102 may use blur filters such as a Gaussian filter related to the blur strengths of the view images.

In addition, when the pseudoscopic image occurs, the blur effect application unit 102 may reduce disparity of a corresponding view image or corresponding object so as to minimize disparity inversion. That is, the blur effect application unit 102 may apply other effects capable of reducing the disparity of the corresponding view image or the corresponding object, based on the blur strengths of the view images determined by the blur strength determination unit 101.

That is, the multi-view image processing apparatus 100 may minimize the disparity inversion in the pseudoscopic image, by reducing the disparity by applying the blur effect to the view images and the object included in the view images having probability of the pseudoscopic image in which disparity of the left view image and the right view image are inversed.

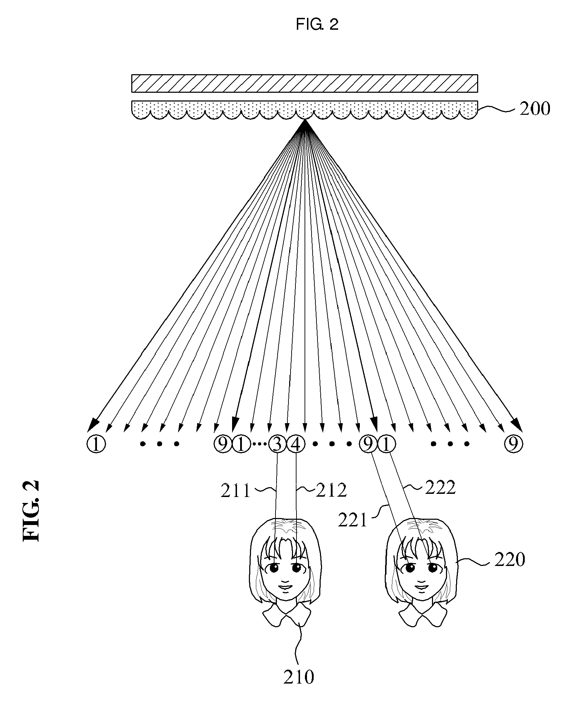

FIG. 2 illustrates a multi-view image display apparatus 200 according to embodiments

According to FIG. 2, in the multi-view image display apparatus 200, same view groups or viewing cones are repeated at intervals of 9. The multi-view image display apparatus 200 may output 3D images inclined from the left to the right on a view 1 to a view 9 in order from the view 1 to the view 9.

The multi-view image display apparatus 200 may generate a plurality of views using a panel and a lenticular sheet or parallax barrier, as shown in FIG. 2.

Since the multi-view image display apparatus 200 outputs images through the plurality of views, the viewer may appreciate the images output by the multi-view image display apparatus 200 in various positions.

Here, in the multi-view image display apparatus 200, the view groups may be repeated at a particular interval due to optical characteristics of the lenticular sheet included in the multi-view image display apparatus 200. The viewer located at a boundary between the repeated view groups may not correctly appreciate the output image.

For example, when a viewer 210 is located between a view 3 and a view 4, the viewer may see a left view image 211 corresponding to the view 3 by the left eye and see a right view image 212 corresponding to the view 4 by the right eye, thereby watching a 3D image.

However, when a viewer 220 is located at the view 9 and the view 1, the viewer 220 may see a right view image 221 corresponding to the view 9 by the left eye and see a left view image 222 corresponding to the view 1 by the right eye.

Thus, for the viewer 220 to watch a correct 3D image, the left view image needs to be output at the view 9 while the right view image needs to be output at the view 1.

However, since the multi-view image display apparatus 200 outputs the views inclined from the left to the right in order from the view 1 to the view 9, the right view image may be output at the view 9 and the left view image may be output at the view 1.

Accordingly, the viewer 220 may watch the pseudoscopic image with inversed disparity.

Here, the multi-view image processing apparatus 100 may apply the blur effect to the objects having different disparity in the right view image 221 expressed by the view 9 and the left view image 222 expressed by the view 1, thereby minimizing the disparity inversion.

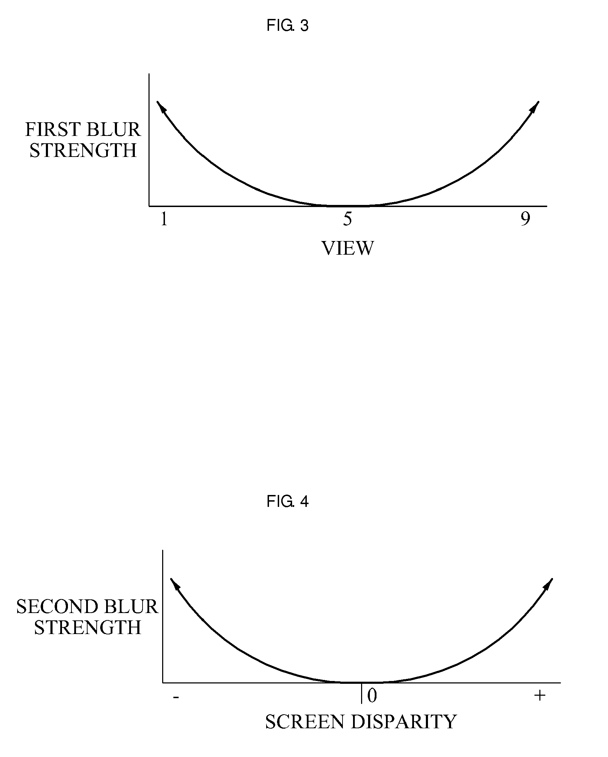

FIG. 3 illustrates relationships between the views of the view images and the first blur strength of the view images, according to embodiments.

As shown in FIG. 3, when the multi-view image expresses the view 1 to the view 9, the blur strength determination unit 101 may determine the first blur strength according to a difference between the views of the view images and the view 1 or a difference between the views of the view images and the view 9.

When the multi-view image expresses the view 1 to the view 9, the view 1 may be expressed next to the view 9 as shown in FIG. 2. Therefore, the view 1 and the view 9 may be defined as boundary views, that is, views located at a boundary between repeated view groups. When the viewer watches a view image of the view 9 and a view image of the view 1 by the left eye and the right eye, respectively, a pseudoscopic image may be generated, in which disparity of the objects included in the view images is inversely shown.

Therefore, as the views of the view images are closer to the view 1 or the view 9 which are the boundary views, the blur strength determination unit 101 may determine the first blur strength of the view images to be larger, as shown in FIG. 3.

Here, since a view 5 is farthest from the boundary views, there may be almost no occurrence probability of the pseudoscopic image at the view 5. Accordingly, the first blur strength of the view 5 may be zero.

In addition, in FIG. 3, the first blur strength corresponding to the views may be determined by the multi-view image. To be specific, presuming that the first blur strength of a view located in a middle of the views is zero and that the first blur strength increases according to an increase of the view toward 1 or N, a gradient of a curve of FIG. 3 may be varied according to the multi-view image.

FIG. 4 illustrates relationships between the screen disparity of the object and the second blur strength of the object in the view images, according to embodiments.

The blur strength determination unit 101 may identify the screen disparity of the object included in the view images based on the disparity information, and determine the second blur strength based on the screen disparity of the object.

In detail, the blur strength determination unit 101 may increase the second blur strength of the object according to the increase in the disparity of the object, as shown in FIG. 4. When the screen disparity included in the disparity information is zero, the disparity of the object is zero at the left view image and the right view image. As the screen disparity increases in the positive direction or the negative direction, the disparity of the object at the left view image and the right view image may be increased.

In addition, since the object of which the screen disparity is zero is expressed identically at the left view image and the right view image, although the pseudoscopic image is generated such that the viewer watches the left view image by the right eye, the image may be expressed the same as when the viewer watches the left view image by the left eye. Accordingly, since the disparity of the object is not changed even without a blur effect, the second blur strength of the object may be zero.

In FIG. 4, in addition, the second blur strength corresponding to the screen disparity may be determined by the multi-view image. In detail, presuming that the screen blur strength is zero when the screen disparity is zero and that the second blur strength increases according to an increase of the view in a positive direction or negative direction, a gradient of a curve of FIG. 4 may be varied according to the multi-view image.

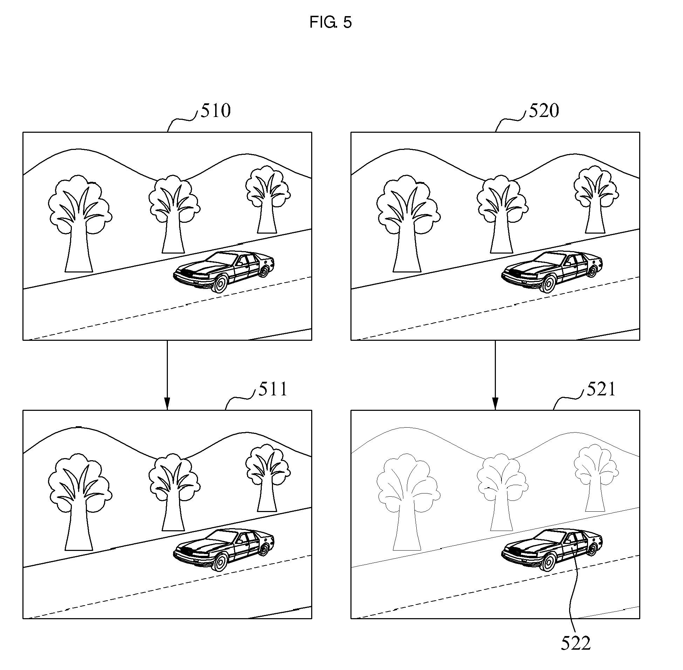

FIG. 5 illustrates example view images applying a blur effect, according to embodiments.

In FIG. 5, the blur effect is applied in different manners according to views of the view images.

A first view image 510 of FIG. 5 denotes a view image of the view 5 of FIG. 2. A second view image 520 of FIG. 5 denotes the view image of the view 9 of FIG. 2.

Here, as shown in FIG. 2, the view 5 is the farthest from the boundary views. Therefore, since a first blur strength at the view 5 is zero as shown in FIG. 3, the multi-view image processing apparatus 100 may apply a blur effect with a blur strength set to zero to the first view image 510.

When the blur strength is zero, this indicates that the blur effect is zero. A first view image 511 output by the multi-view image processing apparatus 100 may be the same as before the blur effect is applied, as shown in FIG. 5.

Conversely, the blur strength at the view 9 may be maximum as shown in FIG. 3. Therefore, the multi-view image processing apparatus 100 may apply a blur effect with a blur strength set to the maximum value to the second view image 520. Therefore, a second view image 521 output by the multi-view image processing apparatus 100 may have reduced disparity due to the blur effect, as shown in FIG. 5.

When the second view image 520 is a view image in which a depth value is applied to a background, screen disparity of a mountain and tree corresponding to the background among objects included in the view image may be large whereas screen disparity of a car 522 may be zero. Here, the multi-view image processing apparatus 100 may not apply the blur effect to the car 522 having no disparity inversion in the second view image 520, so as to prevent the car 522 from being blurred.

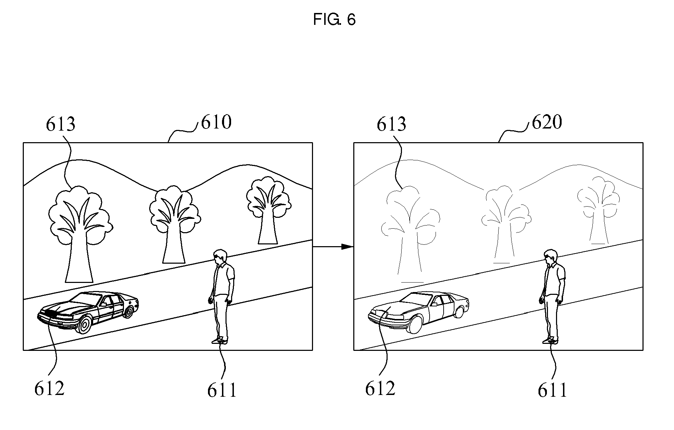

FIG. 6 illustrates an example view image applying a blur effect, according to embodiments.

In FIG. 6, the blur effect is applied in different manners according to the screen disparity of the objects.

A view image 610 of FIG. 6 may be a view image in which a depth value is applied to a background. In the view image 610, screen disparity of a person 611 located in a most front position is zero, screen disparity of a car 612 located in a middle position is medium, and screen disparity of a mountain and tree 613 located in a most rear position is largest.

The multi-view image processing apparatus 100 may apply the blur effect differently to the person 611, the car 612, and the mountain and tree 613. In detail, when a pseudoscopic image occurs, the mountain and tree 613 having the largest screen disparity have a largest degree of disparity inversion and therefore may not be recognized by the viewer. Accordingly, the multi-view image processing apparatus 100 may apply the blur effect strongly to the mountain and tree 613 to reduce the screen disparity. Therefore, when the pseudoscopic image occurs, the degree of disparity inversion may be reduced.

Thus, in the view image 620 output by the multi-view image processing apparatus 100, the blur effect may not be applied to the person 611, a medium degree of the blur effect may be applied to the car 612, and a strong degree of the blur effect may be applied to the mountain and tree 613.

That is, the multi-view image processing apparatus 100 according to the example embodiments may reduce the disparity inversion by applying the blur effect differently according to the screen disparity of the objects, such that the person 611 in which the screen disparity is not inversed is shown clear while the mountain and tree 613 in which the screen disparity is largely inversed is strongly blurred.

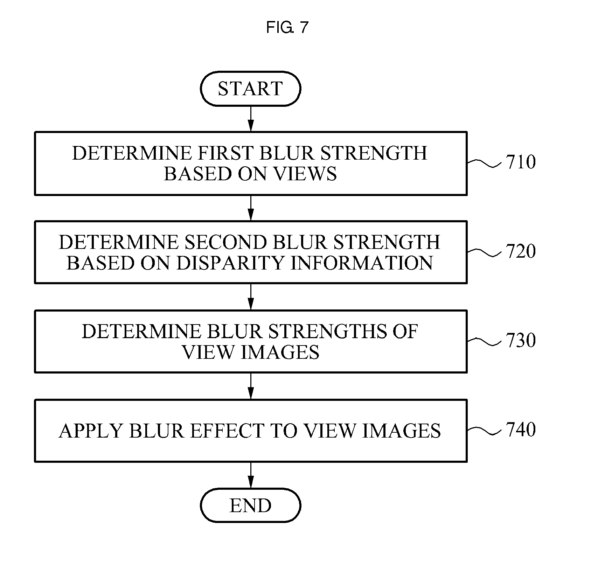

FIG. 7 illustrates a multi-view image processing method according to embodiments.

In operation 710, a blur strength determination unit 101 may determine a first blur strength based on views of view images.

For example, when a multi-view image expresses a view 1 to a view N, the blur strength determination unit 101 may determine the first blur strength according to a difference between the views of the view images and the view 1 or a difference between the views of the view images and the view N. In detail, as the views of the view images are closer to the view 1 or the view N which are the boundary views, the blur strength determination unit 101 may determine the first blur strength of the view images to be larger.

In operation 720, the blur strength determination unit 101 may determine a second blur strength based on disparity information of the view images.

The blur strength determination unit 101 may identify screen disparity of an object included in the view images based on the disparity information, and determine the second blur strength based on the screen disparity of the object.

To be specific, the blur strength determination unit 101 may increase the second blur strength of the object as the disparity of the object is larger. When screen disparity included in the disparity information is zero, the corresponding object has no disparity at a left view image and a right view image. As the screen disparity increases in a positive direction or negative direction, the disparity of the object may be increased at the left view image and the right view image. Therefore, the blur strength determination unit 101 may determine the second blur strength of the object, by applying the screen disparity of the object in FIG. 4.

In operation 730, the blur strength determination unit 101 may determine blur strengths of the view images according to the first blur strength determined in operation 710 and the second blur strength determined in operation 720. For example, the blur strength determination unit 101 may determine the blur strengths of the view images, by applying multiplication or a min-operation to the first blur strength and the second blur strength.

In operation 740, a blur effect application unit 102 may apply a blur effect to the view images according to the blur strengths of the view images determined in operation 730. Here, the blur effect application unit 102 may use various blur filters. For example, the blur effect application unit 102 may use blur filters such as a Gaussian filter related to the blur strengths of the view images.

That is, the multi-view image processing method may minimize the disparity inversion in the pseudoscopic image, by reducing the disparity by applying the blur effect to the view images and the object included in the view images having probability of the pseudoscopic image in which disparity of the left view image and the right view image is inversed.

The methods according to the above-described embodiments may be recorded in non-transitory computer-readable media including program instructions to implement various operations embodied by a computing device such as a computer. The computing device may have one or more processors. The media may also include, alone or in combination with the program instructions, data files, data structures, and the like. The program instructions recorded on the media may be those specially designed and constructed for the purposes of the embodiments, or they may be of the kind well-known and available to those having skill in the computer software arts. Examples of non-transitory computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The media may be transfer media such as optical lines, metal lines, or waveguides including a carrier wave for transmitting a signal designating the program command and the data construction. Examples of program instructions include both machine code, such as produced by a compiler, and files containing higher level code that may be executed by the computer using an interpreter. The non-transitory computer-readable media may also be a distributed network, so that the program instructions are stored and executed in a distributed fashion. The program instructions may be executed by one or more processors or processing devices. The computer-readable media may also be embodied in at least one application specific integrated circuit (ASIC) or Field Programmable Gate Array (FPGA). The described hardware devices may be configured to act as one or more software modules in order to perform the operations of the above-described embodiments, or vice versa.

Although embodiments have been shown and described, it would be appreciated by those skilled in the art that changes may be made in these embodiments without departing from the principles and spirit of the disclosure, the scope of which is defined in the claims and their equivalents.

## Claims

1. A multi-view image processing apparatus comprising:
a blur strength determiner, using at least one processor, configured to determine blur strengths for view images constituting a multi-view image, based on views of the view images and disparity information of the view images, and
a blur effect applier configured to apply a blur effect to the view images according to the determined blur strengths of the view images.

2. The multi-view image processing apparatus of claim 1, wherein the blur strength determiner is configured to determine such blur strengths for the view images that the degree of disparity inversion in a multi-view image obtained using the view images with the applied blur effect is reduced compared to a multi-view image obtained using the view images without the applied blur effect.

3. The multi-view image processing apparatus of claim 1 or 2, wherein the blur strength determiner is configured to determine the blur strengths of the view images as a function of a first blur strength based on the views of the view images, i.e. based on a position of the view image in a viewing-cone of the multi-view image, and a second blur strength based on the disparity information of the view images.

4. The multi-view image processing apparatus of claim 3, wherein the blur strength determiner is configured to identify disparity of an object included in the view images based on the disparity information, and to determine the second blur strength based on the disparity of the object.

5. The multi-view image processing apparatus of claim 4, wherein the blur strength determiner is configured to increase the second blur strength of the object according to an increase in the disparity of the object.

6. The multi-view image processing apparatus of any one of the previous claims, wherein the blur strength determiner is configured to determine the first blur strength according to a difference between the views of the view images and a first view or according to a difference between the views of the view images and a view N, when the multi-view image expresses the first view to the view N, wherein N is a positive integer greater than one.

7. The multi-view image processing apparatus of claim 6, wherein the blur strength determiner is configured to determine the first blur strength to be larger as the views of the view images are closer to the first view or the view N of a boundary view, wherein N is a positive integer greater than one.

8. A multi-view image processing method comprising:
determining, using at least one processor, blur strengths for view images constituting a multi-view image, based on views of the view images and disparity information of the view images, and
applying a blur effect to the view images according to the blur strengths of the view images.

9. The multi-view image processing method of claim 8, wherein the determining comprises:
determining the blur strengths of the view images using a first blur strength based on the views of the view images and a second blur strength based on the disparity information of the view images.

10. The multi-view image processing method of claim 9, wherein the determining comprises:
identifying disparity of an object included in the view images based on the disparity information, and determining the second blur strength based on the disparity of the object; wherein preferably the second blur strength of the object is increased according to an increase in the disparity of the object.

11. The multi-view image processing method of claim 9 or 10, wherein the determining comprises:
determining the first blur strength according to a difference between the views of the view images and a first view or according to a difference between the views of the view images and a view N, when the multi-view image expresses from the first view to the view N, wherein N is a positive integer greater than one; wherein preferably the first blur strength is determined to be larger as the views of the view images are closer to the first view 1 or the view N, wherein N is a positive integer greater than one.

12. The apparatus of any one of the claims 1-7 further comprising:
a multi-view image display configured for receiving the images to which blur has been applied and for displaying the plurality of views to a viewer.

13. The apparatus of any one of the claims 1-7 or 12, wherein the blur effect applier is configured to apply a blur effect such that disparity inversion is reduced, and wherein disparity information of the images comprises disparity between depth values of objects within each image.

14. The method of any one of the claims 8-11, further comprising:
displaying the images to which blur has been applied as the plurality of views to a viewer; wherein preferably the blur effect is applied to reduce disparity inversion, and wherein disparity information of the images comprises disparity between depth values of objects within each image.

15. A non-transitory computer readable recording medium storing computer readable instructions to control at least one processor to implement the method of any one of the claims 8-11 or 14.
